# EUROPEAN PATENT APPLICATION

(11) **EP 3 786 528 A1**
(43) Date of publication of application: **03.03.2021**
(21) Application number: 19793878.0
(22) Date of filing: 15.04.2019
(51) Int. Cl.: F24C 7/04, F24C 7/02, F24C 7/08, G06T 7/60, G06T 7/00

(54) **HEATING COOKING DEVICE**

(30) Priority: 25.04.2018 JP 2018083665
(71) Applicant: Panasonic Intellectual Property Management Co., Ltd., Osaka-shi, Osaka 540-6207 (JP)
(72) Inventor: SADAHIRA Masafumi, Osaka-shi Osaka 540-6207 (JP); NAKAMURA Hideki, Osaka-shi Osaka 540-6207 (JP); KONDO Ryuta, Osaka-shi Osaka 540-6207 (JP); SHIBUYA Makoto, Osaka-shi Osaka 540-6207 (JP)
(74) Representative: SSM Sandmair
(86) International application number: PCT/JP2019/016073
(87) International publication number: WO 2019/208284

(57) **Abstract**

A cooking device (111) comprises: a heating unit (101) that heats a heating target object; a heating chamber (102) that houses the heating target object; a lighting unit (103a to 103d) that illuminates inside the heating chamber (102); an image pickup unit (104) that takes an image inside the heating chamber (102); a display unit (105) that displays a contour of the heating target object; and an image acquisition unit (106) that acquires an image of the heating target object from the image pickup unit. The cooking device (111) further comprises: a contour candidate generator (107) that generates plural contour candidates of the heating target object from the image acquired by the image acquisition unit (106); a presenting contour deciding unit (108) that decides contours to be displayed at the display unit (105) from the plural contour candidates based on the image acquired by the image acquisition unit (106); a heating goal setting unit (112) that sets a heating goal for each of the contours; and a controller (109) that controls an entire operation.

## Description

### TECHNICAL FIELD

The present disclosure relates to a cooking device for cooking foods and the like.

### BACKGROUND ART

Among cooking devices each having a heating chamber, such a cooking device is known that is provided with an image pickup unit for taking an image inside the heating chamber so that the size of a food, or a heating target object, can be confirmed (refer, for example, to PTL 1). Also, such a cooking device is known that extracts a change in color of a food, or a heating target object, based on an image taken by an image pickup unit provided for taking an image inside the heating chamber to recognize and determine a browned condition of the food being cooked, or a food condition during cooking, so that conditions of the food can be confirmed (refer, for example, to PTL 2).

However, the conventional cooking devices disclosed by PTLs 1 and 2 use the taken image to confirm the heated condition and perform an automatic control. Therefore, the user can do, after instructing the cooking device to start cooking, nothing but leave the cooking device to finish cooking. That is, the user cannot easily instruct the cooking device a user's intention to cook the heating target object before starting cooking.

### Citation List

### Patent Literature

PTL 1: Unexamined Japanese Utility Model Publication No. S59-40714
PTL 1: Unexamined Japanese Patent Publication No. 2001-272045

### SUMMARY OF THE INVENTION

The present disclosure is to provide a cooking device which can perform a display operation that allows a user to easily set a heating instruction depending on a heating target object.

A cooking device of the present disclosure comprises: a heating unit that heats a heating target object; a heating chamber that houses the heating target object; a lighting unit that illuminates inside the heating chamber; an image pickup unit that takes an image inside the heating chamber; a display unit that displays a contour of the heating target object; an image acquisition unit that acquires an image of the heating target object from the image pickup unit; and a contour candidate generator that generates plural contour candidates of the heating target object from the image acquired by the image acquisition unit. Also, the cooking device further comprises: a presenting contour deciding unit that decides contours to be displayed at the display unit from the plural contour candidates generated by the contour candidate generator, the presenting contour deciding unit from the image acquired by the image acquisition unit to decide the contours to be displayed; a heating goal setting unit that sets a heating goal for each of the contours decided by the presenting contour deciding unit; and a controller that controls an entire operation.

According to this cooking device, it is possible to decide the contours to be presented to the user, present the contours to the user through the display unit, obtain contours intended by the user, and display a heating goal for each of the contours through the display unit. Also, by providing the heating goal setting unit that sets a heating instruction for each of the contours decided by the presenting contour deciding unit, it is possible to provide a display operation that allows the user to easily set a heating instruction depending on the heating target object.

Also, the cooking device of the present disclosure may further comprises: a food recognizer that recognizes a food inside each of the contours presented by the presenting contour deciding unit; and a displaying temperature determiner that determines a display temperature based on a recognition result of the food recognizer. With this configuration, it is possible to preliminarily present to the user an initial value depending on the food. In other words, it is possible to provide a display operation that allows the user to set the heating instruction more easily.

According to the cooking device of the present disclosure, it is possible to provide a display operation that allows the user to easily set the heating instruction depending on the heating target object.

### BRIEF DESCRIPTION OF DRAWINGS

FIG. 1 is a schematic configuration diagram illustrating a main part of a cooking device according to a first exemplary embodiment.
FIG. 2 is a diagram explaining a procedure of generating contours in the cooking device according to the first exemplary embodiment.
FIG. 3 is a diagram explaining a procedure of deciding a heating goal display in the cooking device according to the first exemplary embodiment, where (a) is a diagram showing an original image, (b) is a diagram showing contour images, (c) is a diagram showing contour display positions, and (d) is a diagram showing a heating goal display image.
FIG. 4 is a diagram explaining a flow of contour presentation by the cooking device according to the first exemplary embodiment.
FIG. 5 is a schematic configuration diagram illustrating a main part of a cooking device according to a second exemplary embodiment.
FIG. 6 is a diagram explaining a heating goal display in the cooking device according to the second exemplary embodiment, where (a) is a diagram showing an original image, (b) is a diagram showing a food recognition result, and (c) is a diagram showing a heating goal display image.

### DESCRIPTION OF EMBODIMENTS

A cooking device of the present disclosure comprises: a heating unit that heats a heating target object; a heating chamber that houses the heating target object; a lighting unit that illuminates inside the heating chamber; an image pickup unit that takes an image inside the heating chamber; a display unit that displays a contour of the heating target object; and an image acquisition unit that acquires an image of the heating target object from the image pickup unit. Also, the cooking device further comprises: a contour candidate generator that generates plural contour candidates of the heating target object from the image acquired by the image acquisition unit; and a presenting contour deciding unit that decides contours to be displayed at the display unit from the plural contour candidates generated by the contour candidate generator, the presenting contour deciding unit from the image acquired by the image acquisition unit to decide the contours to be displayed. Also, the cooking device further comprises: a heating goal setting unit that sets a heating goal for each of the contours decided by the presenting contour deciding unit; and a controller that controls an entire operation.

With this configuration, the cooking device decides contours to be presented to the user, presents the contours to the user through the display unit, obtains contours intended by the user, and displays a heating goal for each of the contours through the display unit. Also, by providing the heating goal setting unit that sets a heating instruction for each of the contours decided by the presenting contour deciding unit, it is possible to provide a display operation that allows the user to easily set a heating instruction depending on the heating target object.

In another aspect of the present disclosure, the cooking device may further comprise: a food recognizer that recognizes a food inside each of the contours presented by the presenting contour deciding unit; and a displaying temperature determiner that determines a display temperature based on a recognition result of the food recognizer.

With this configuration, by further providing the displaying temperature determiner that determines a display temperature based on a recognition result of the food recognizer that recognizes a food inside each of the contours presented by the presenting contour deciding unit, it is possible to preliminarily present to the user an initial value depending on the food. Accordingly, it is possible to provide a display operation that allows the user to set the heating instruction more easily.

Hereinafter, exemplary embodiments of the present disclosure will be described with reference to the drawings. It should be noted that the present disclosure should not be limited by the exemplary embodiments.

### FIRST EXEMPLARY EMBODIMENT

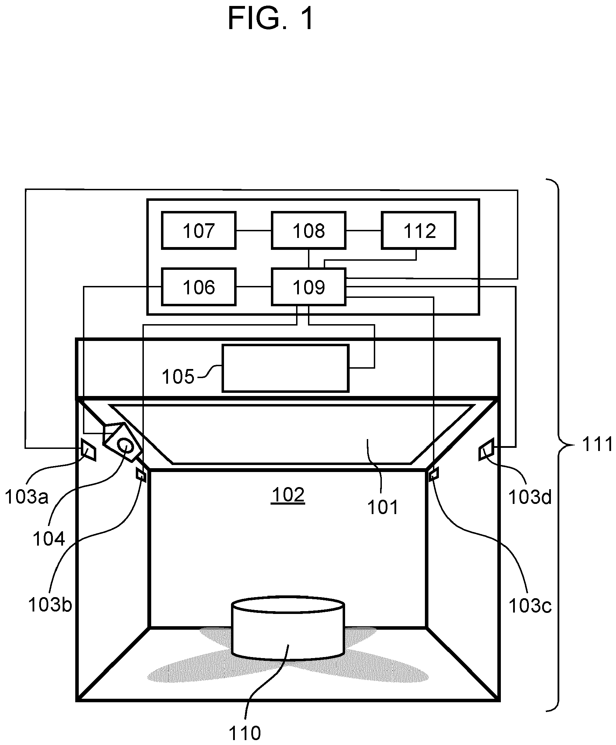

FIG. 1 is a schematic configuration diagram illustrating a main part of a cooking device according to a first exemplary embodiment.

As shown in FIG. 1, cooking device 111 has heating chamber 102 for housing inside thereof heating target object 110 and is configured to be able to cook heating target object 110 by heating unit 101 which includes at least one of a heater, a microwave generator and a superheated steam generator. A microwave generator included in heating unit 101 may be configured to include a phased array antenna, so that a microwave beam can be concentrated on a specified heating position and also a non-heating area can be set.

Heating chamber 102 has a substantially cuboid shape constructed by walls (an upper wall, a left wall, a back wall, a right wall, and a bottom wall) and a door (not shown). The walls of heating chamber 102 are each made, for example, of a porcelain enamel steel plate, a stainless-steel plate, or a coated steel plate. Dimensions of the cuboid heating chamber 102 may, for example, be 400 mm in width and 300 mm in depth. On the left wall of heating chamber 102, image pickup unit 104 is disposed in a structure including a slant surface formed on a part of the left wall by drawing so that an image of heating target object 110 inside heating chamber 102 can be taken in a looked-down direction by a camera. Further, lighting units 103a to 103d configured by LEDs (Light Emitting Diodes) are disposed on some walls of heating chamber 102. This configuration ensures an amount of light necessary for image pickup unit 104 to take an image of heating target object 110 inside heating chamber 102.

Controller 109 is configured using a microcomputer (not shown) which has a CPU (Central Processing Unit), a memory, an input/output interface, and the like. Controller 109 includes image acquisition unit 106, contour candidate generator 107, presenting contour deciding unit 108, and heating goal setting unit 112.

Image acquisition unit 106 is electrically connected to image pickup unit 104 to acquire data of an image showing inside heating chamber 102 which is taken by image pickup unit 104.

Contour candidate generator 107 generates plural contour candidates based on the image acquired by image acquisition unit 106.

Heating goal setting unit 112 calculates a center of gravity of each of the presenting contours decided by presenting contour deciding unit 108, and sets the calculated center of gravity as a display position on which a target temperature for setting a heating goal or a target color for determining a heating completion will be presented.

Display unit 105 is configured by a liquid crystal display electrically connected to controller 109 to present to a user the image inside heating chamber 102 acquired through image acquisition unit 106 and the contours decided by presenting contour deciding unit 108. At the same time, display unit 105 displays a content-to-be-set on the display position decided by heating goal setting unit 112 to prompt the user to enter a setting.

Operations and actions of the cooking device configured as above will hereinafter be described.

In the description hereinbelow, contents from a basic operation to an application will be described in the following order:

(1) Process of generating a contour of a heating target object and a problem of presenting the contour;
(2) Process of deciding a contour and setting a heating goal;
(3) Process of setting a heating goal; and
(4) Entire operation.

In the following description, an image acquired by image acquisition unit 106 will be explained basically as a 24-bit color image in which each of the three primary colors - Red (R), Green (G) and Blue (B) - is expressed by 8 bits (0 to 255). A color of the image data will be expressed as (R, G, B) = (numerical value of R, numerical value of G, numerical value of B). The numerical value of each of R, G and B is defined such that value 0 represents black and each color approaches to its pure color as the numerical value becomes closer to 255. About 16,770,000 kinds of colors can be expressed by mixing R, G and B. For example, RGB = (255, 0, 0) represents red, RGB = (255, 255, 0) represents yellow obtained by mixing blue and green, RGB = (0, 0, 0) represents black, and RGB = (255, 255, 255) represents white.

### (1) Process of generating contours of a heating target object and a problem of presenting the contour

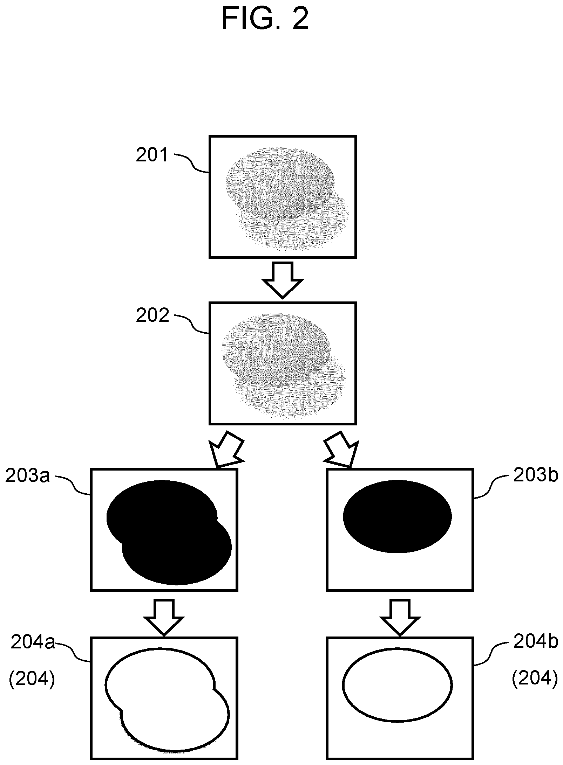

FIG. 2 is a diagram explaining a procedure of generating contours in the cooking device according to the first exemplary embodiment.

A process for obtaining contour images 204a and 204b (hereinafter also collectively called contour images 204) from taken image 201 of heating target object 110 will be described with reference to FIG. 2.

First, taken image 201, which is a color image, is converted to a gray scale image 202 (for example, an 8-bit gray scale). Then, a threshold value for binarizing the gradation of the gray scale image is determined (for example, in the case of the 8-bit gray scale, a value equal to or larger than 128, which is the center value 128 of the 256 gray levels, may be determined as the threshold value). A pixel having a gray level equal to or larger than the threshold value is made white, and a pixel having a gray level smaller than the threshold value is made black. In this manner, binary image 203 can be obtained. A contour of heating target object 110 can be obtained by drawing a boundary line connecting boundaries between white and black regions in the obtained binary image 203.

A problem arising here is that the contour changes largely depending on selection of the threshold value used to obtain binary image 203. It is difficult to determine which is correct, contour image 204a obtained based on threshold value a from binary image 203a or contour image 204b obtained based on threshold value b from binary image 203b. That is, it is difficult to determine correctness of contour images 204 outputted as an image processing result.

On the other hand, since it is natural that taken image 201 obtained by normally shooting heating target object 110 contains many gray levels, it can be said from an engineering point of view that the number of existing contour variations is equal to the number of gray levels of the gray scale image. If the threshold value is fixed to a single value so that a contour is obtained in a stereotypical condition, a correct contour cannot be obtained in some cases. For example, in a case where a white object like a bread dough is placed, as heating target object 110, on a white cooking sheet lined on the bottom wall, heating target object 110 and the background are unified, so that a correct contour cannot be obtained.

To obtain a correct contour, considering the above-described problem, it is necessary to add a step of presenting a contour candidate to the user and asking the user to confirm. Cooking device 111 that performs an automatic cooking with reference to a contour obtained without confirmation of the user is likely to frequently cause a malfunction out of the user's intention.

In this case, it is important that the cooking device has a mechanism for reducing the operational burden of the user. According to the present exemplary embodiment, contour generating unit 107 generates contour variations, and presenting contour deciding unit 108 presents to the user contours dependent on a condition in which taken image 201 has been obtained through display unit 105 considering priority, and asks the user's approval. This makes it possible to reduce the operational burden of the user.

### (2) Process of deciding a contour

Controller 109 sends an instruction to decide a threshold value to presenting contour deciding unit 108. In response to this instruction, presenting contour deciding unit 108 confirms distribution of RGB values in taken image 201, and decides whether the taken image is a brighter image having relatively higher RGB values (RGB = (255, 255, 255) indicates a brightest white) or a darker image having relatively lower RGB values (RGB = (0, 0, 0) indicates a darkest black). For example, presenting contour deciding unit 108 compares a rate of the number of pixels each having a gray level larger than 128, or the center value of the gray level, with a predetermined value. Use of this information makes it possible to properly set the binarizing threshold value to prevent the background and the contour of heating target object 110 from being unified.

Presenting contour deciding unit 108 sets, as a basic threshold value, the center value of the grayscale (e.g., 128) when white and black regions are balanced, a higher threshold value (e.g., 160) when white regions are majority, and a lower threshold value (e.g., 96) when black regions are majority. Presenting contour deciding unit 108 requests contour candidate generator 107 to use binarizing threshold values including the basic threshold value and threshold values changed at specified intervals from the basic threshold value (e.g., ±20, ±40) to generate contour candidates.

Contour candidate generator 107 uses the set threshold values to generate contour images 204 corresponding to the requested threshold values in the manner as described above.

Each of the contour images generated here contains mixed other contours than the contour of heating target object 110 such, for example, as a contour of the portion formed by drawing inside heating chamber 102. For this reason, a contour image obtained when heating target object 110 is not placed in heating chamber 102 (having preliminarily been stored as initial information) is subtracted from the generated contour image to eliminate the other contours than the contour of heating target object 110. Presenting contour deciding unit 108 determines the number of contours and the areas of the contours in each of the contour images obtained here and decides priorities of the contours to be presented to the user.

For example, in a case where the number of contours is the same in all of the obtained plural contour images, the contour image generated based on the basic threshold value is decided as a first candidate, and the other candidates are presented in the order of the used threshold values closer to the basic threshold value (e.g., in the order of +20, -20, +40 and -40). In a case where the number of contours of the contour image generated based on the basic threshold value is relatively small among the obtained plural contour images, presenting contour deciding unit 108 determines it is likely that the contour of heating target object 110 and the background are unified and sets higher priorities to the contour images having the larger number of contours (contour images which are the same in the number of contours to each other are presented in the order of the used threshold values closer to the basic threshold value).

When the priorities of the presenting contour images have been determined, presenting contour deciding unit 108 passes the contour images to controller 109. This completes the contour deciding process.

Contour candidate generator 107 may generate the contour candidates by changing parameters of the image information of the taken image, without changing the threshold value, to obtain the same effects. This can be realized by uniformly adding a specified value to each of R, G and B components like (R + adding value, G + adding value, B + adding value) or uniformly subtracting a specified value from each of R, G and B components like (R - subtracting value, G - subtracting value, B - subtracting value), while keeping the threshold value constant.

In a case where black regions particularly occupy a large part, in which influence of the black shadow increases, the RGB values of the regions having relatively small RGB values may be uniformly multiplied by a specified multiplication value to reduce the influence of the shadow. For example, a value smaller than 100 is multiplied by 1.2 within a range not exceeding a maximum value 100. In a case where this is applied to RGB = (60, 90, 100), the calculation result of multiplication by 1.2 becomes (72, 108, 120), and the result of uniformly limiting the values larger than 100 to 100 becomes (72, 100, 100). Manipulation of the image information parameters in the manner as described above makes it possible to make the dark portion lighter to reduce the influence of the shadow.

### (3) Process of setting a heating goal

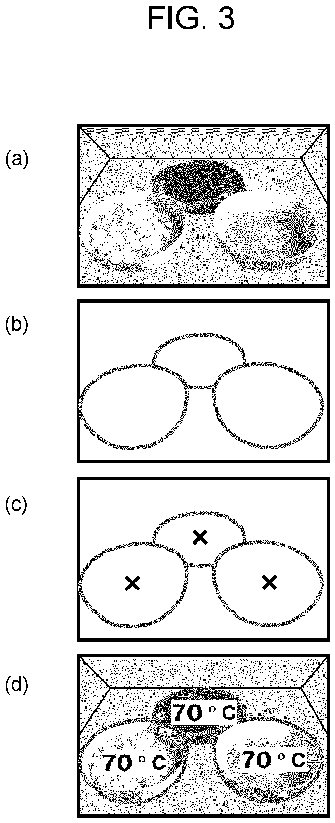

FIG. 3 is a diagram explaining a procedure of deciding a heating goal display in the cooking device according to the first exemplary embodiment, where (a) in FIG. 3 is a diagram showing an original image, (b) in FIG. 3 is a diagram showing contour images, (c) in FIG. 3 is a diagram showing contour display positions, and (d) in FIG. 3 is a diagram showing a heating goal display image.

By the operations as described in the above (2), presenting contour deciding unit 108 decides the contours like the contour image shown in (b) in FIG. 3 from the original image shown in (a) in FIG. 3. Then, in response to the instruction by controller 109, heating goal setting unit 112 confirms the number of contours at the contour display positions as shown in (b) in FIG. 3 (three contours in FIG. 3), and calculates the center of gravity of each contour as shown in (c) in FIG. 3 (the position indicated by "×" in each of the contour display positions).

Next, heating goal setting unit 112 provides controller 109 with the information including the number of contours and the center of gravity of each contour. Controller 109 causes display unit 105 to display a set temperature (or a heating completion target color) representing a heating goal of each contour in a heating goal display image as shown in (d) in FIG. 3 so that the user can change the setting of the heating goal as needed.

### (4) Entire operation

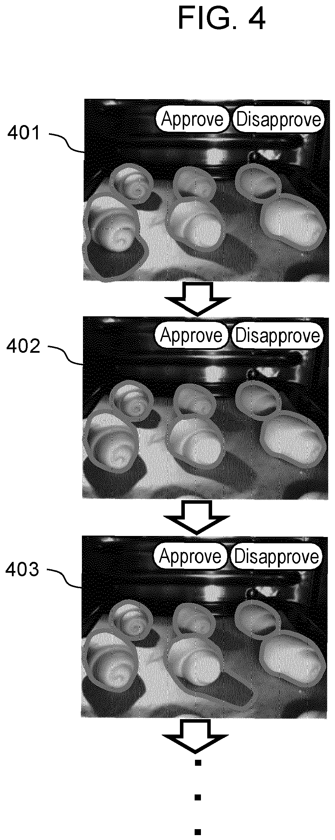

FIG. 4 is a diagram explaining a flow of contour presentation by the cooking device according to the first exemplary embodiment.

When heating target object 110 is placed inside heating chamber 102 by the user, controller 109 causes image acquisition unit 106 to acquire the image of heating target object 110 being taken by image pickup unit 104. Controller 109 causes image acquisition unit 106 to pass the acquired image of heating target object 110 to presenting contour deciding unit 108, and requests presenting contour deciding unit 108 to decide the contours to be presented to the user and the order of presenting the contours. Presenting contour deciding unit 108 uses contour candidate generator 107 to decide the contours to be presented to the user together with the respective priorities and passes them to controller 109.

Controller 109 presents the obtained presenting contours to the user through display unit 105 in the order of first candidate contour image 401, second candidate contour image 402 and third candidate contour image 403 as shown in FIG. 4, and asks the user's approval to obtain a contour intended by the user. Here, the contour image is displayed to be superposed on the taken image for the user to easily understand. In the case shown in FIG. 4, as would be apparent when the user looks at the image, the second candidate is the correct contour.

Controller 109 passes the contour image established here to heating goal setting unit 112 and obtains the number of contours and the center of gravity of each contour. Based on the obtained information, controller 109 causes display unit 105 to display a set temperature as a heating goal (or a heating completion target color) for each of the contours so that the user can change the setting of the heating goal as needed.

Based on the obtained initial contour and heating goal, controller 109 causes heating unit 101 to heat heating target object 110, and monitors a contour change from the initial contour as well as changes of the temperature and color inside the contour set as the heating goal to use the contour to determine a heating stop.

In a case where answers of non-approval are received from the user plural times, it may sometimes rather hamper the convenience of the user to repetitively ask the user's approval. For this reason, a contour may be directly obtained by means, for example, of requesting the user to trace the image on display unit 105.

As described hereinabove, according to the present exemplary embodiment, it is possible to provide a display operation that allows the user to easily set the heating instruction depending on heating target object 110 by providing heating goal setting unit 112 that sets the heating instruction for each of the contours decided by presenting contour deciding unit 108.

### SECOND EXEMPLARY EMBODIMENT

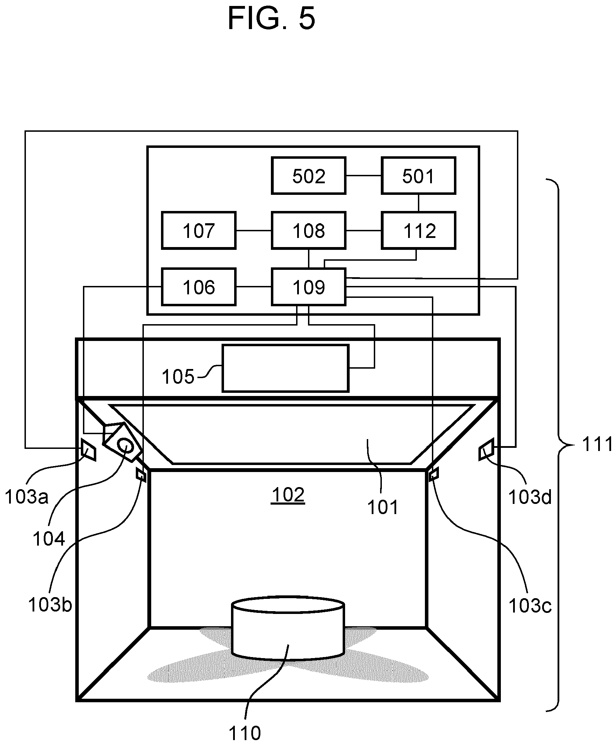

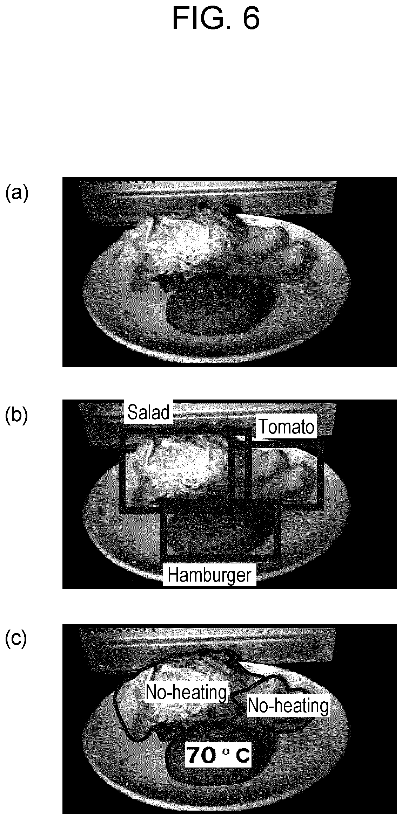

FIG. 5 is a schematic configuration diagram illustrating a main part of a cooking device according to a second exemplary embodiment. FIG. 6 is a diagram explaining a heating goal display in the cooking device according to the second exemplary embodiment, where (a) in FIG. 6 is a diagram showing an original image, (b) in FIG. 6 is a diagram showing a food recognition result, and (c) in FIG. 6 is a diagram showing a heating goal display image.

Hereinafter, the cooking device according to the second exemplary embodiment of the present disclosure will be described.

The cooking device according to the second exemplary embodiment is largely different from the cooking device according to the first exemplary embodiment in that the cooking device according to the second exemplary embodiment has food recognizer 501 that performs recognition of a food inside a contour presented by presenting contour deciding unit 108, and displaying temperature determiner 502 that determines a display temperature based on a recognition result of food recognizer 501.

Food recognizer 501 may be implemented using a microcomputer (not shown) having a neural network that has completed a learning so that a food, which is heating target object 110, placed inside heating chamber 102, can be identified from the image acquired by image acquisition unit 106. Also, displaying temperature determiner 502 may be implemented using a microcomputer (not shown) that has stored therein a recommended target temperature with respect to the food recognized and identified by food recognizer 501.

In the following description of the cooking device, each component having the same function and structure as those of the corresponding component of the cooking device according to the first exemplary embodiment is indicated by the same reference mark, and the corresponding detailed description of the first exemplary embodiment is incorporated herein.

When heating target object 110 is placed inside heating chamber 102 by the user, controller 109 causes image acquisition unit 106 to acquire an image of heating target object 110 being taken by image pickup unit 104. Controller 109 causes image acquisition unit 106 to pass the acquired image of heating target object 110 to presenting contour deciding unit 108, and requests presenting contour deciding unit 108 to decide contours to be presented to the user and the order of presenting the contours. Presenting contour deciding unit 108 uses contour candidate generator 107 to decide the contours to be presented to the user together with their priorities in the above-described operations and passes the decided contours and priorities to controller 109. Controller 109 passes the contour images to heating goal setting unit 112 and obtains the number of contours and the center of gravity of each contour.

Here, controller 109 passes the presenting contours and the taken image to food recognizer 501. Food recognizer 501 carries out recognition of the food in each of the presenting contours. Food recognizer 501 passes the kind of the food obtained as the result of the recognition to displaying temperature determiner 502 and obtains a temperature to be displayed as a heating goal of the recognized food from displaying temperature determiner 502.

Here, in a case where the food recognized from the original image as shown in (a) in FIG. 6 is a food which is usually not heated, like salad or tomato, a target value "No-heating" is displayed as the heating goal, as shown as the heating goal display in (c) in FIG. 6. Of course, the user who wishes to heat raw vegetables may set a temperature to change the heating goal from "No-heating" to heating.

Based on the obtained information, controller 109 causes display unit 105 to display, as a heating goal of each contour, the temperature determined by displaying temperature determiner 502 at the center of gravity of the corresponding contour.

Here, based on the obtained initial contour and the heating goal, controller 109 causes heating unit 101 to heat heating target object 110, and monitors at least one of a contour change from the initial contour and a temperature in the contour set as the heating goal to use the contour to determine a heating stop. In a case where the heating goal is "No-heating", heating unit 101 performs the heating operation so that the food set as the "No-heating" object is not irradiated by the microwave. This realizes a "No-heated" condition.

As described hereinabove, the cooking device according to the present exemplary embodiment has displaying temperature determiner 502 that determines a display temperature based on a recognition result of food recognizer 501 that performs recognition of a food inside a contour presented by presenting contour deciding unit 108. This makes it possible to preliminarily present to the user an initial value dependent on the food, and to provide a display operation allowing the user to set the heating instruction more easily.

### INDUSTRIAL APPLICABILITY

As described hereinabove, according to the present disclosure, it is possbile to obtain such a particulary advantageous effect that it is possible to perform a display operation that allows a user to easily set a heating instruction depending on a heating target object. Accordingly, the present disclosure is applicable to cooking devices which can recognize a shape of a heating target object as a contour and individually set a heating goal to perform cooking, such, for example, as ovens, electric grills and food steamers. The present disclosure is also applicable to and useful for various kinds of indutrial heating devices such, for example, as drying devices and chemical reactors, in which recognition of color change or shape change of a heating target object works beneficially.

### REFERENCE MARKS IN THE DRAWINGS

- 101: heating unit
- 102: heating chamber
- 103a to 103d: lighting unit
- 104: image pickup unit
- 105: display unit
- 106: image acquiring unit
- 107: contour candidate generator
- 108: presenting contour deciding unit
- 109: controller
- 110: heating target object
- 111: cooking device
- 112: heating goal setting unit
- 201: taken image
- 202: gray scale image
- 203: binary image
- 203a: binary image (threshold value a)
- 203b: binary image (threshold value b)
- 204: contour image
- 204a: contour image (threshold value a)
- 204b: contour image (threshold value b)
- 401: contour image (a first candidate)
- 402: contour image (a second candidate)
- 403: contour image (a third candidate)
- 501: food recognizer
- 502: displaying temperature determiner

## Claims

1. A cooking device comprising:
a heating unit that heats a heating target object;
a heating chamber that houses the heating target object;
a lighting unit that illuminates inside the heating chamber;
an image pickup unit that takes an image inside the heating chamber;
a display unit that displays a contour of the heating target object;
an image acquisition unit that acquires an image of the heating target object from the image pickup unit;
a contour candidate generator that generates plural contour candidates of the heating target object from the image acquired by the image acquisition unit;
a presenting contour deciding unit that decides contours to be displayed at the display unit from the plural contour candidates generated by the contour candidate generator, the decision being made based on the image acquired by the image acquisition unit;
a heating goal setting unit that sets a heating goal for each of the contours decided by the presenting contour deciding unit; and
a controller that controls an entire operation.

2. The cooking device according to claim 1, further comprising:
a food recognizer that recognizes a food inside each of the contours presented by the presenting contour deciding unit; and
a displaying temperature determiner that determines a display temperature based on a recognition result of the food recognizer.
